# EUROPEAN PATENT SPECIFICATION

(11) **EP 3 502 319 B1**
(45) Date of publication and mention of the grant of the patent: **13.01.2021**
(21) Application number: 18196117.8
(22) Date of filing: 21.09.2018
(51) Int. Cl.: C25C 1/12, B01J 45/00

(54) **CATALYTIC REGENERATION OF RESIN FOR ANTIMONY REMOVAL**
KATALYTISCHE REGENERATION EINES HARZES ZUR ENTFERNUNG VON ANTIMON
RÉGÉNÉRATION CATALYTIQUE DE RÉSINE POUR L'ÉLIMINATION D'ANTIMOINE

(30) Priority: 19.12.2017 US 201762607678 P
(43) Date of publication of application: 26.06.2019
(73) Proprietor: Eco-Tec Ltd., Pickering, Ontario L1W 3T9 (CA)
(72) Inventor: SHEEDY, Michael, A., deceased (CA)
(74) Representative: Hoyng Rokh Monegier LLP

(56) References cited:
- US-A- 2 945 746
- US-A1- 2010 230 294
- P.A. RIVEROS ET AL: "A STUDY OF THE ION EXCHANGE REMOVAL OF ANTIMONY(III) AND ANTIMONY(V) FROM COPPER ELECTROLYTES", CANADIAN METALLURGICAL QUARTERLY, vol. 47, no. 3, 1 January 2008 (2008-01-01), pages 307-316, XP055574570, CA ISSN: 0008-4433, DOI: 10.1179/cmq.2008.47.3.307
- Hong-Bing Hou: "Differential determination of antimony (III) and antimony (V) by inductively coupled plasma atomic spectrometry with hydride generation", Analytical Sciences, 31 December 1998 (1998-12-31), pages 1161-1164, XP055574791, Retrieved from the Internet: URL:https://www.jstage.jst.go.jp/article/a nalsci/14/6/14_6_1161/_pdf [retrieved on 2019-03-27]

## Description

### FIELD OF THE INVENTION

This invention relates to a process for desorbing or eluting an impurity adsorbed to an ion exchange resin, where the impurity is adsorbed to the resin from having previously contacted the resin with a metal electrolyte used for metal electrorefining or electrowinning, or any other fluid containing the impurity. In particular, in a preferred embodiment this invention relates to a process for eluting antimony(V) from an aminophosphonic acid resin, and which includes contacting the resin with an eluant or eluting solution comprising hydrochloric acid, a reducing agent having a sulfite compound and a catalyst having an iodine compound, said antimony(V) having previously adsorbed to the aminophosphonic resin by having contacted the resin with a copper electrolyte used in an industrial copper electrorefining or electrowinning process.

### BACKGROUND OF THE INVENTION

Electrorefining, such as an industrial copper electrorefining process, is used to produce a metal product of an elevated purity level which may be sold to a manufacturer utilizing the highly pure metal. For instance, the copper electrorefining process may involve applying an electric current to an electrolytic cell containing an electrolyte, and an unrefined copper anode and a pure metal cathode starter sheet submerged in the electrolyte, whereby copper from the anode dissolves into the electrolyte and plates onto the cathode sheet. Over time, the electrolyte becomes contaminated with impurities, such as antimony, arsenic, iron, nickel, tin, cobalt, zinc, silver, gold and bismuth, contained in the unrefined anode also dissolving into the electrolyte, and negatively affects electrorefining by also plating on the cathode sheet or being present in the electrolyte as slime. It is thus necessary to reduce or remove impurities from the electrolyte from time to time.

Antinomy existing both as antimony(III) and antimony(V) (or Sb(III) and Sb(V)) may be removed by contacting the electrolyte with a cation exchange resin having an aminophosphonic group or -NHCH₂PO₃H₂ to adsorb Sb(III) and Sb(V). Once the resin is loaded with Sb(III)/Sb(V) and washed, and the purified electrolyte separated from the resin, the loaded resin is eluted by contacting the resin with a concentrated hydrochloric acid solution as an eluting solution, and hydrochloric acid is subsequently recovered from the effluent by evaporation.

It has been recognized that poisoning of the aminophosphonic resin may occur over time with repeated adsorption and desorption, with Sb(V) being more difficult and slower than Sb(III) to desorb from the resin with hydrochloric acid, and thus gradually accumulating on the resin and reducing resin loading capacity. It has been appreciated that attempts to desorb Sb(V) by increasing the elution time or the amount of the concentrated hydrochloric acid solution used is impractical and requires greater costs associated with using a costly acid evaporator for hydrochloric acid recovery.

Riveros et al., Canadian Metallurgical Quarterly, 47:3, 307-316 published a study on the solubility and the ion exchange behavior of both Sb(III) and Sb(V) in a synthetic copper electrolyte noting that only Sb(III) was readily eluted by HCl or complexing agents while the elution of Sb(V) was extremely slow with HCl and ineffective with complexing agents without suggesting any measure to avoid the accumulation of Sb(V) on the resin.

Hou et al., Analytical Sciences, Volume 14 Issue 6 Pages 1161-1164, published a study on the differential determination of antimony (III) and antimony (V) by inductively coupled plasma atomic spectrometry with hydride generation, disclosing that antimony(V) may be reduced with highly acidic solutions containing potassium iodide.

### SUMMARY OF THE INVENTION

One possible non-limiting object of the present invention is to provide a process for catalytically regenerating Sb(V) from an ion exchange resin used for removing antimony from fluids containing antimony in the Sb(V) form, and which overcomes the deficiencies in the prior art.

Another possible non-limiting object of the present invention is to provide a process for eluting Sb(V) from an aminophosphonic resin, and which may reduce an amount of an hydrochloric acid eluting solution required for eluting Sb(III) and Sb(V), while eliminating or substantially reducing solid formation.

Another possible non-limiting object of the present invention is to provide a process for eluting Sb(V) from an aminophosphonic resin, and which may operate to reduce degradation of the resin loading capacity and purification efficiency, while permitting sufficiently rapid Sb(V) reduction and subsequent Sb(III) elution to occur within the resin bed or stationary phase.

In one simplified aspect, the present invention provides a process for eluting a metal or metalloid cation from a cation exchange resin loaded with the cation, said cation capable of having at least first and second oxidation states, and the second oxidation state being greater than the first oxidation state, wherein said process comprises contacting the resin with an eluting solution having an eluting ionic or acid compound, a reducing agent and a catalyst, wherein said catalyst is selected to catalyze reduction of the cation by the reducing agent from the second oxidation state to the first oxidation state, wherein the eluting ionic or acid compound is selected to desorb the cation from the resin, and wherein the cation comprises arsenic, iron, bismuth or antimony.

In another aspect, the present invention provides an eluting solution for desorbing a metal or metalloid cation from a cation exchange resin loaded with the cation, said cation capable of having at least first and second oxidation states, and the second oxidation state being greater than the first oxidation state, wherein said eluting solution comprises an eluting ionic or acid compound, a reducing agent and a catalyst, wherein said catalyst is operable to catalyze reduction of the cation by the reducing agent from the second oxidation state to the first oxidation state, and wherein the eluting ionic or acid compound is operable to desorb the cation from the resin.

In yet another aspect, the present invention provides a process for the catalytic regeneration of a resin loaded with Sb(V), and which includes contacting the resin with an eluting solution provided with an acidic regenerant, a sulfite reducing agent and an iodine catalyst, whereby the iodine catalyst operates to catalyze reduction of Sb(V) loaded or adsorbed onto a stationary phase or resin bed of the resin to form Sb(III) and the acidic regenerant is operable to desorb Sb(III) from the resin.

In yet another aspect, the present invention provides a process for eluting Sb(V) from a cation exchange resin loaded with said Sb(V), said process comprising contacting the resin with an eluting solution comprising an acid compound, a reducing agent and a catalyst, wherein said catalyst is operable to catalyze a reduction of Sb(V) by the reducing agent to obtain Sb(III), and wherein the acid compound is operable to desorb Sb(III) from the resin.

In yet another aspect, the present invention provides an eluting solution for desorbing Sb(V) from a cation exchange resin loaded with said Sb(V), wherein said eluting solution comprises an acid compound, a reducing agent and a catalyst, wherein said catalyst is operable to catalyze a reduction of Sb(V) by the reducing agent to obtain Sb(III), and wherein the acid compound is operable to desorb Sb(III) from the resin.

In yet another aspect, the present invention provides a process for eluting Sb(V) adsorbed to a cation exchange resin, the process comprising contacting the resin with an iodine compound and a sulfur compound, the sulfur compound comprising one or more of sulfite, bisulfite and metabisulfite, wherein the iodine compound and the sulfur compound are selected to effect reduction of said Sb(V) to form Sb(III).

In yet another aspect, the present invention provides an eluting mixture for desorbing Sb(V) adsorbed to a cation exchange resin, said eluting mixture comprising an iodine compound and a sulfur compound, the sulfur compound comprising one or more of sulfite, bisulfite and metabisulfite, wherein the iodine compound and the sulfur compound are selected to effect reduction of said Sb(V) to form Sb(III).

In yet another aspect, the present invention provides a process for removing antimony from an electrolyte, said process comprising: contacting the electrolyte with a cation exchange resin selected to adsorb at least antimony, and removing the electrolyte from the resin; and contacting the resin with an eluting solution comprising a sulfur compound, an iodine compound and an acid compound, wherein the sulfur compound comprises one or more of sulfite, bisulfite and metabisulfite, the iodine compound comprises one or more of sodium iodide and potassium iodide, and the acid compound comprises one or more selected from the group consisting of hydrochloric acid, sulfuric acid, nitric acid, phosphoric acid, hydrofluoric acid, hydrobromic acid, hydroiodic acid, perchloric acid and boric acid, and wherein the iodine compound and the sulfur compound are selected to effect catalyzed reduction of antimony(V) to form antimony(III), and the acid compound is selected to desorb at least said antimony(III) from the resin.

In yet another aspect, the present invention provides a process for removing antimony from an electrolyte, said process comprising: contacting the electrolyte with a cation exchange resin selected to adsorb at least antimony; contacting the resin with an iodine compound and a sulfur compound, the sulfur compound comprising one or more of sulfite, bisulfite and metabisulfite, wherein the iodine compound and the sulfur compound are selected to effect reduction of antimony(V) to form antimony(III); and contacting the resin with an acid compound selected to desorb at least said antimony(III) from the resin.

It is to be appreciated that the electrolyte is not limited to a copper electrolyte or a copper electrowinning or electrorefining electrolyte, and the process and the eluting mixture or solution of the present invention may operate for removing a metal or metalloid cation or antimony as a contaminant or impurity from other electrolytes, such as those for electrowinning or electrorefining other metals, including but not limited to nickel, lead, zinc, silver, gold, aluminum, chromium or manganese. In one embodiment, the copper electrolyte comprises an aqueous solution comprising one or more of copper sulfate and sulfuric acid. Furthermore, a concentration of the contaminant cation or antimony which may be adsorbed and desorbed from the resin is not specifically limited, and may be between about 10 mg/L and about 1 g/L or preferably between about 50 and about 500 mg/L, inclusive of both Sb(III) and Sb(V). In one embodiment, the contaminant cation comprises one or more of antimony, bismuth, iron, tin, nickel, lead, manganese, platinum, gold, silver, cobalt, zinc and arsenic, preferably antimony.

In one embodiment, the cation exchange resin comprises a stationary phase having an aminophosphonate functional group or any other functional group or ligand operable to adsorb or chelate the metal/metalloid cation or antimony. In one embodiment, the resin comprises an aminophosphonic resin preferably having the aminomethylphosphonic acid functional group -NHCH₂PO₃H₂ for adsorbing Sb(V) and optionally Sb(III). In one embodiment, the stationary phase further comprises a hydrophilic support portion coupled to the functional group, the support portion comprising polystyrene, silica gel, titania, alumina or zirconia. In one embodiment, the cation exchange resin is a commercially available resin, including but not limited to UR-3300, UR-3300S, MX-2 (Miyoshi Oil and Fat Company), Dowex 50W-X8, Lewatit TP 260 or Duolite C-467.

In one embodiment, the process further comprise contacting the resin with an ionic or acid compound selected to desorb at least said Sb(III) from the resin, the ionic or acid compound comprising one or more of sodium chloride, hydrochloric acid, sulfuric acid, nitric acid, phosphoric acid, hydrofluoric acid, hydrobromic acid, hydroiodic acid, perchloric acid and boric acid, preferably one or more of hydrochloric acid, nitric acid and sulfuric acid, or more preferably hydrochloric acid. In one embodiment, the eluting mixture or solution further comprises a strong mineral acid, preferably one or more of hydrochloric acid, nitric acid, sulfuric acid, hydrofluoric acid, hydrobromic acid, perchloric acid and hydroiodic acid, more preferably one or more of hydrochloric acid, nitric acid and sulfuric acid, or most preferably hydrochloric acid, with a concentration between about 1 N and about 50 N, preferably between about 2 N and about 10 N, more preferably between about 5 N and about 8 N or most preferably about 6 N. In one embodiment, the eluting mixture or solution comprises hydrochloric acid with a concentration between about 1 N and about 50 N, preferably between about 2 N and about 10 N, more preferably between about 5 N and about 8 N or most preferably about 6 N.

In one embodiment, the acid compound is provided in the form of a solution or an aqueous solution containing the acid compound. In one embodiment, the eluting solution is the acid compound in the form of the solution or the aqueous solution comprising the sulfur compound and the iodine compound. In one embodiment, the eluting solution is an aqueous solution of hydrochloric acid at a concentration between about 2 mol/L and about 10 mol/L or between about 5 mol/L and about 8 mol/L.

In one embodiment, said contacting the resin comprises contacting the resin with an eluting mixture comprising the iodine compound, the sulfur compound and the acid compound. It has been appreciated that the invention may permit in one embodiment, contacting the resin with the iodine and sulfur compounds to effect reduction of Sb(V) to Sb(III), and then contacting the resin with acid compound to elute or desorb Sb(III), or in an alternative embodiment, contacting the resin with the iodine, sulfur and acid compounds in the eluting mixture or solution to concurrently effect reduction of Sb(V) to Sb(III) and desorb Sb(III).

In one embodiment, the eluting mixture or solution has a temperature between about 4°C and about 180°C, preferably between about 15°C and about 120°C, more preferably between about 20°C and about 95°C or most preferably between about 65°C and about 90°C when contacting the resin. It is to be appreciated that a pH of the eluting solution is not particularly limited, and may be determined based on for example the amount or concentration of the ionic or acid compound.

In one embodiment, the eluting mixture or solution further comprises one or more of a buffer, a chelating or complexing agent, sodium chloride and sodium hydroxide. In one embodiment, the buffer comprises one or more of acetic acid, citric acid, HEPES, lactic acid, tricine, MES, MOPS, phosphate, PIPES and TES. In one embodiment, the chelating or complexing agent comprises tartaric acid or ethylenediaminetetraacetic acid (EDTA). In one embodiment, the eluting solution further comprises sodium hydroxide at a concentration between about 10 g/L and about 150 g/L, preferably between about 50 g/L and about 100 g/L, or more preferably about 80 g/L with respect to a total volume of the eluting mixture or solution.

In one embodiment, said contacting the resin with the eluting mixture or solution comprises communicating the eluting mixture or solution through the resin at a flow rate between about 0.001 mL/g resin/minute and about 10 mL/g resin/minute, preferably between about 0.001 mL/g resin/minute and about 5 mL/g resin/minute, or more preferably between about 0.01 mL/g resin/minute and about 1 mL/g resin/minute. In one embodiment, said contacting the resin with the eluting mixture or solution comprises communicating a volume of the eluting mixture or solution through the resin, said volume being between about 5 mL/g resin and about 150 mL/g resin, preferably between about 10 mL/g resin and about 100 mL/g resin, or more preferably between about 15 mL/g resin and about 50 mL/g resin. It is to be appreciated that the volume of the eluting mixture or solution may be much greater, if to perform a more complete contaminant metal/metalloid cation or antimony elution. In one embodiment, the cation exchange resin comprises a resin bed with a pressure drop across the resin bed between about 1 psi and about 100 psi, preferably between about 2 psi and about 80 psi or more preferably between about 5 psi and about 50 psi.

In one embodiment, the reducing agent comprises a sulfur compound or a compound having a sulfite, bisulfite, metabisulfite or dithionite anion and a cation. In one embodiment, the compound is a sulfite, bisulfite, metabisulfite or dithionite salt of a metal cation, the metal cation preferably being an alkali or alkali earth metal, such as barium, beryllium, calcium, lithium, magnesium, sodium, or potassium, or more preferably sodium or potassium. In one embodiment, the sulfur compound further comprises an alkali or alkali earth metal cation, such as barium, beryllium, calcium, lithium, magnesium, sodium, or potassium, or preferably sodium or potassium. In one embodiment, the sulfur compound is selected to effect the reduction of said Sb(V) to form said Sb(III), and the iodine compound is selected to catalyze said reduction.

In one embodiment, the reducing agent or the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, preferably sodium sulfite or sodium bisulfite, or more preferably sodium sulfite. In one embodiment, the reducing agent or the eluting mixture further comprises a metal reducing agent preferably comprising one or more of lithium, sodium, magnesium, aluminum, chromium and iron. In one embodiment, the reducing agent or the eluting mixture or solution further comprises one or more of carbon monoxide, oxalic acid, formic acid, thiourea, phosphorous acid and a hypophosphite compound, or preferably sodium hypophosphite. It is to be appreciated that the reducing agent or the eluting mixture or solution may in the alternative or additional include other reducing agents or compounds effective to reduce Sb(V) or the contaminant metal or metalloid cation.

It is to be appreciated that a concentration or an amount of the reducing agent or sulfur compound will vary depending a number of factors, including but not limited to an amount of adsorbed Sb(V) in the cation exchange resin, the cation exchange resin used, a flow rate and temperature of the eluting mixture or solution and an amount other impurities adsorbed in the resin. In one embodiment, the eluting mixture or solution comprises the reducing agent or the sulfur compound at a concentration between about 0.01 g/L and about 500 g/L, preferably between about 0.1 g/L and 300 g/L, more preferably between about 0.5 g/L and about 200 g/L or most preferably between about 1.0 g/L and about 120 g/L, with respect to a total volume of the eluting mixture or solution. In one embodiment, the reducing agent or the sulfur compound comprises sodium sulfite at a concentration between about 1 g/L and about 120 g/L, preferably between about 10 g/L and about 80 g/L or more preferably between about 20 g/L and about 30 or 35 g/L with respect to a total volume of the eluting mixture solution.

In one embodiment, the catalyst or the iodine compound is selected to catalyze reduction of said Sb(V) to form said Sb(III). In one embodiment, the catalyst comprises an iodine compound comprising one or both of sodium iodide and potassium iodide. In one embodiment, the eluting mixture or solution comprises between about 1 mg/L and about 1,000 mg/L, preferably between about 10 mg/L and about 800 mg/L or more preferably between about 30 g/mL and about 600 mg/L of the reducing agent or the iodine compound, with respect to a total volume of the eluting mixture or solution. In one embodiment, the catalyst or the iodine compound comprises between about 10 mg/L and about 200 mg/L, preferably between about 30 mg/L and about 125 mg/L or more preferably between about 50 g/mL and about 80 mg/L of sodium iodide, and/or between about 30 g/mL and about 500 mg/L, preferably between about 75 g/mL and about 250 mg/L or more preferably between about 100 g/mL and about 150 mg/L of potassium iodide, with respect to a total volume of the eluting mixture or solution.

In one embodiment, advantageously the reducing agent or the sulfur compound is sodium sulfite, the catalyst or the iodine compound is one or both of sodium iodide and potassium iodide, and preferably, the acid compound is hydrochloric acid. In one embodiment, the eluting mixture is an eluting solution comprising: sodium sulfite at a concentration between about 10 g/L and about 80 g/L or between about 20 g/L and about 35 g/L; sodium iodide at a concentration between about 30 mg/L and about 125 mg/L and/or potassium iodide at a concentration between about 75 mg/L and about 250 mg/L; and hydrochloric acid at a concentration between about 2 N and about 10 N or between about 5 N and 8 N, with respect to a total volume of the eluting solution.

It is to be appreciated that said contacting the resin with the eluting mixture or solution is not particularly limited, and the eluting mixture or solution may for example include a single mixture or solution or a plurality of mixtures or solutions each comprising one or more of the ionic or acid compound, the reducing agent or sulfur compound and the catalyst or iodine compound. In an alternative embodiment, concentrations of the ionic or acid compound, the reducing agent or sulfur compound and the catalyst or iodine compound may be varied over time, as the eluting solution is continuously prepared and communicated to the resin.

By way of non-limiting examples, if the cation exchange resin has been poisoned with a significant amount of adsorbed Sb(V), the eluting mixture or solution may include first and second eluting mixtures or solutions, with the first eluting mixture or solution comprising the reducing agent or sulfur compound and the catalyst or iodine compound, and the second eluting mixture or solution the ionic or acid compound, and optionally the reducing agent or sulfur compound and the catalyst or iodine compound. In the embodiment, the first eluting mixture or solution may be retained in the cation exchange resin for a period time to permit reduction of Sb(V) to Sb(III), and the first eluting mixture or solution is thereafter flushed with the second eluting mixture or solution. Alternatively, the composition of the eluting mixture or solution may be varied over time, with the concentration of the ionic or acid compound increasing over time, and those of the reducing agent or sulfur compound and the catalyst or iodine compound decreasing over time. In one embodiment, said contacting the resin with the eluting mixture or solution comprises a linear or gradient elution or a step isocratic elution with respect to the ionic or acid compound. In one embodiment, said contacting the resin with the eluting mixture or solution comprises circulating the eluting mixture or solution through the resin for a predetermined period of time, and removing the eluting mixture or solution from the resin. It is to be appreciated that the circulating step may be repeated with further eluting mixtures or solutions, as may be required to desorb more Sb(V).

In one embodiment, the eluting solution is prepared by obtaining an aqueous solution of the ionic or acid compound and adding to the aqueous solution the reducing agent or sulfur compound and the catalyst or iodine compound, preferably in liquid form.

It is to be appreciated that the process or the eluting mixture or solution may be utilized at every regeneration cycle of the resin, or after some set interval or at a predetermined frequency as may be required to restore resin capacity lost due to poisoning by Sb(V).

In one embodiment, the process further comprises removing or washing the electrolyte from the resin prior to said contacting the resin with the iodine compound and the sulfur compound, and the acid compound comprises one or more of hydrochloric acid, sulfuric acid, nitric acid, phosphoric acid, hydrofluoric acid, hydrobromic acid, hydroiodic acid, perchloric acid and boric acid. Preferably, the electrolyte is washed from the resin with water or sulfuric acid.

In aspect (1), there is provided a process for eluting antimony(V) adsorbed to a cation exchange resin, the process comprising contacting the resin with an iodine compound and a sulfur compound, the sulfur compound comprising one or more of sulfite, bisulfite and metabisulfite, wherein the iodine compound and the sulfur compound are selected to effect reduction of said antimony(V) to form antimony(III).

In aspect (2), there is provided a process of any one or a combination of one or more of aspects (1) to (9) and (19) to (32), further comprising contacting the resin with an acid compound selected to desorb at least said antimony(III) from the resin, the acid compound comprising one or more of hydrochloric acid, sulfuric acid, nitric acid, phosphoric acid, hydrofluoric acid, hydrobromic acid, hydroiodic acid, perchloric acid and boric acid.

In aspect (3), there is provided a process of any one or a combination of one or more of aspects (1) to (9) and (19) to (32), wherein said contacting comprises contacting the resin with an eluting mixture comprising the iodine compound, the sulfur compound and the acid compound, and wherein the sulfur compound is selected to effect the reduction of said antimony(V) to form said antimony(III), and the iodine compound is selected to catalyze said reduction.

In aspect (4), there is provided a process of any one or a combination of one or more of aspects (1) to (9) and (19) to (32), wherein the sulfur compound further comprises an alkali or alkali earth metal cation selected from the group consisting of barium, beryllium, calcium, lithium, magnesium, sodium and potassium, and the eluting mixture comprises the sulfur compound at a concentration between about 1.0 g/L and about 120 g/L, between about 10 g/L and about 80 g/L or between about 20 g/L and about 35 g/L, with respect to a total volume of the eluting mixture.

In aspect (5), there is provided a process of any one or a combination of one or more of aspects (1) to (9) and (19) to (32), wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

In aspect (6), there is provided a process of any one or a combination of one or more of aspects (1) to (9) and (19) to (32), wherein the iodine compound comprises one or both of sodium iodide and potassium iodide.

In aspect (7), there is provided a process of any one or a combination of one or more of aspects (1) to (9) and (19) to (32), wherein the resin comprises a stationary phase having an aminophosphonate functional group or an aminomethylphosphonic acid functional group of the formula NHCH₂PO₃H₂ for adsorbing said antimony(V) and optionally said antimony(III), and the resin is for purifying a copper electrorefining or electrowinning electrolyte, the electrolyte comprising one or more impurities selected from the group consisting of antimony, bismuth, iron, tin, nickel, lead, manganese, platinum, gold, silver, cobalt, zinc and arsenic, optionally wherein the electrolyte has a concentration between about 10 mg/L and about 1 g/L or between about 50 mg/L and about 500 mg/L of said antimony.

In aspect (8), there is provided a process of any one or a combination of one or more of aspects (1) to (9) and (19) to (32), wherein the sulfur compound is sodium sulfite, the iodide compound is one or both of sodium iodide and potassium iodide, and optionally, the acid compound is hydrochloric acid.

In aspect (9), there is provided a process of any one or a combination of one or more of aspects (1) to (9) and (19) to (32), wherein the eluting mixture is an eluting solution comprising: sodium sulfite at a concentration between about 10 g/L and about 80 g/L or between about 20 g/L and about 35 g/L; sodium iodide at a concentration between about 30 mg/L and about 125 mg/L and/or potassium iodide at a concentration between about 75 mg/L and about 250 mg/L; and hydrochloric acid at a concentration between about 2 N and about 10 N or between about 5 N and 8 N, with respect to a total volume of the eluting solution, and optionally wherein a temperature of the eluting solution is between about 20°C and about 95°C or between about 65°C and about 90°C when contacting the resin.

In aspect (10), there is provided an eluting mixture for desorbing antimony(V) adsorbed to a cation exchange resin, said eluting mixture comprising an iodine compound and a sulfur compound, the sulfur compound comprising one or more of sulfite, bisulfite and metabisulfite, wherein the iodine compound and the sulfur compound are selected to effect reduction of said antimony(V) to form antimony(III).

In aspect (11), there is provided a mixture of any one or a combination of one or more of aspects (10) to (18), further comprising an acid compound selected to desorb at least said antimony(III) from the resin, the acid compound comprising one or more of hydrochloric acid, sulfuric acid, nitric acid, phosphoric acid, hydrofluoric acid, hydrobromic acid, hydroiodic acid, perchloric acid and boric acid.

In aspect (12), there is provided a mixture of any one or a combination of one or more of aspects (10) to (18), wherein the sulfur compound is selected to effect the reduction of said antimony(V) to form said antimony(III), and the iodine compound is selected to catalyze said reduction.

In aspect (13), there is provided a mixture of any one or a combination of one or more of aspects (10) to (18), wherein the sulfur compound further comprises an alkali or alkali earth metal cation selected from the group consisting of barium, beryllium, calcium, lithium, magnesium, sodium and potassium, and the eluting mixture comprises the sulfur compound at a concentration between about 1.0 g/L and about 120 g/L, between about 10 g/L and about 80 g/L or between about 20 g/L and about 35 g/L, with respect to a total volume of the eluting mixture.

In aspect (14), there is provided a mixture of any one or a combination of one or more of aspects (10) to (18), wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

In aspect (15), there is provided a mixture of any one or a combination of one or more of aspects (10) to (18), wherein the iodine compound comprises one or both of sodium iodide and potassium iodide.

In aspect (16), there is provided a mixture of any one or a combination of one or more of aspects (10) to (18), wherein the resin comprises a stationary phase having an aminophosphonate functional group or an aminomethylphosphonic acid functional group of the formula NHCH₂PO₃H₂ for adsorbing said antimony(V) and optionally said antimony(III), and the resin is for purifying a copper electrorefining or electrowinning electrolyte, the electrolyte comprising one or more impurities selected from the group consisting of antimony, bismuth, iron, tin, nickel, lead, manganese, platinum, gold, silver, cobalt, zinc and arsenic, optionally wherein the electrolyte has a concentration between about 10 mg/L and about 1 g/L or between about 50 mg/L and about 500 mg/L of said antimony.

In aspect (17), there is provided a mixture of any one or a combination of one or more of aspects (10) to (18), wherein the sulfur compound is sodium sulfite, the iodide compound is one or both of sodium iodide and potassium iodide, and optionally, the acid compound is hydrochloric acid.

In aspect (18), there is provided a mixture of any one or a combination of one or more of aspects (10) to (18), wherein the eluting mixture is an eluting solution comprising: sodium sulfite at a concentration between about 10 g/L and about 80 g/L or between about 20 g/L and about 35 g/L; sodium iodide at a concentration between about 30 mg/L and about 125 mg/L and/or potassium iodide at a concentration between about 75 mg/L and about 250 mg/L; and hydrochloric acid at a concentration between about 2 N and about 10 N or between about 5 N and 8 N, with respect to a total volume of the eluting solution, and optionally wherein the eluting solution is for being at a temperature between about 20°C and about 95°C or between about 65°C and about 90°C when contacting the resin to desorb said antimony(V).

In aspect (19), there is provided a process for removing antimony from an electrolyte, said process comprising: contacting the electrolyte with a cation exchange resin selected to adsorb at least antimony, and removing the electrolyte from the resin; and contacting the resin with an eluting solution comprising a sulfur compound, an iodine compound and an acid compound, wherein the sulfur compound comprises one or more of sulfite, bisulfite and metabisulfite, the iodine compound comprises one or more of sodium iodide and potassium iodide, and the acid compound comprises one or more selected from the group consisting of hydrochloric acid, sulfuric acid, nitric acid, phosphoric acid, hydrofluoric acid, hydrobromic acid, hydroiodic acid, perchloric acid and boric acid, and wherein the iodine compound and the sulfur compound are selected to effect catalyzed reduction of antimony(V) to form antimony(III), and the acid compound is selected to desorb at least said antimony(III) from the resin.

In aspect (20), there is provided a process of any one or a combination of one or more of aspects (1) to (9) and (19) to (32), wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

In aspect (21), there is provided a process of any one or a combination of one or more of aspects (1) to (9) and (19) to (32), wherein the resin comprises a stationary phase having an aminophosphonate functional group or an aminomethylphosphonic acid functional group of the formula NHCH₂PO₃H₂ for adsorbing said antimony(V) and optionally said antimony(III), and the electrolyte is a copper electrorefining or electrowinning electrolyte, said electrolyte comprising one or more impurities selected from the group consisting of antimony, bismuth, iron, tin, nickel, lead, manganese, platinum, gold, silver, cobalt, zinc and arsenic, optionally wherein the electrolyte has a concentration between about 10 mg/L and about 1 g/L or between about 50 mg/L and about 500 mg/L of said antimony.

In aspect (22), there is provided a process of any one or a combination of one or more of aspects (1) to (9) and (19) to (32), wherein the sulfur compound is sodium sulfite, the iodide compound is one or both of sodium iodide and potassium iodide, and optionally, the acid compound is hydrochloric acid.

In aspect (23), there is provided a process of any one or a combination of one or more of aspects (1) to (9) and (19) to (32), wherein the eluting solution comprises: sodium sulfite at a concentration between about 10 g/L and about 80 g/L or between about 20 g/L and about 35 g/L; sodium iodide at a concentration between about 30 mg/L and about 125 mg/L and/or potassium iodide at a concentration between about 75 mg/L and about 250 mg/L; and hydrochloric acid at a concentration between about 2 N and about 10 N or between about 5 N and 8 N, with respect to a total volume of the eluting solution, and optionally wherein a temperature of the eluting solution is between about 20°C and about 95°C or between about 65°C and about 90°C during said contacting the resin.

In aspect (24), there is provided a process for removing antimony from an electrolyte, said process comprising: contacting the electrolyte with a cation exchange resin selected to adsorb at least antimony; contacting the resin with an iodine compound and a sulfur compound, the sulfur compound comprising one or more of sulfite, bisulfite and metabisulfite, wherein the iodine compound and the sulfur compound are selected to effect reduction of antimony(V) to form antimony(III); and contacting the resin with an acid compound selected to desorb at least said antimony(III) from the resin.

In aspect (25), there is provided a process of any one or a combination of one or more of aspects (1) to (9) and (19) to (32), further comprising removing or washing the electrolyte from the resin prior to said contacting the resin with the iodine compound and the sulfur compound, and the acid compound comprises one or more of hydrochloric acid, sulfuric acid, nitric acid, phosphoric acid, hydrofluoric acid, hydrobromic acid, hydroiodic acid, perchloric acid and boric acid.

In aspect (26), there is provided a process of any one or a combination of one or more of aspects (1) to (9) and (19) to (32), wherein said contacting the resin with the iodine compound and the sulfur compound and said contacting the resin with the acid compound comprise contacting the resin with an eluting mixture comprising the iodine compound, the sulfur compound and the acid compound, and wherein the sulfur compound is selected to effect the reduction of said antimony(V) to form said antimony(III), and the iodine compound is selected to catalyze said reduction.

In aspect (27), there is provided a process of any one or a combination of one or more of aspects (1) to (9) and (19) to (32), wherein the sulfur compound further comprises an alkali or alkali earth metal cation selected from the group consisting of barium, beryllium, calcium, lithium, magnesium, sodium and potassium, and the eluting mixture comprises the sulfur compound at a concentration between about 1.0 g/L and about 120 g/L, between about 10 g/L and about 80 g/L or between about 20 g/L and about 35 g/L, with respect to a total volume of the eluting mixture.

In aspect (28), there is provided a process of any one or a combination of one or more of aspects (1) to (9) and (19) to (32), wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

In aspect (29), there is provided a process of any one or a combination of one or more of aspects (1) to (9) and (19) to (32), wherein the iodine compound comprises one or both of sodium iodide and potassium iodide.

In aspect (30), there is provided a process of any one or a combination of one or more of aspects (1) to (9) and (19) to (32), wherein the resin comprises a stationary phase having an aminophosphonate functional group or an aminomethylphosphonic acid functional group of the formula NHCH₂PO₃H₂ for adsorbing said antimony(V) and optionally said antimony(III), and the electrolyte is a copper electrorefining or electrowinning electrolyte, the electrolyte comprising one or more impurities selected from the group consisting of antimony, bismuth, iron, tin, nickel, lead, manganese, platinum, gold, silver, cobalt, zinc and arsenic, optionally wherein the electrolyte has a concentration between about 10 mg/L and about 1 g/L or between about 50 mg/L and about 500 mg/L of said antimony.

In aspect (31), there is provided a process of any one or a combination of one or more of aspects (1) to (9) and (19) to (32), wherein the sulfur compound is sodium sulfite, the iodide compound is one or both of sodium iodide and potassium iodide, and optionally, the acid compound is hydrochloric acid.

In aspect (32), there is provided a process of any one or a combination of one or more of aspects (1) to (9) and (19) to (32), wherein the eluting mixture is an eluting solution comprising: sodium sulfite at a concentration between about 10 g/L and about 80 g/L or between about 20 g/L and about 35 g/L; sodium iodide at a concentration between about 30 mg/L and about 125 mg/L and/or potassium iodide at a concentration between about 75 mg/L and about 250 mg/L; and hydrochloric acid at a concentration between about 2 N and about 10 N or between about 5 N and 8 N, with respect to a total volume of the eluting solution, and optionally wherein a temperature of the eluting solution is between about 20°C and about 95°C or between about 65°C and about 90°C when contacting the resin.

Additional and alternative features of the present invention will be apparent to a person skilled in the art from the following detailed description of the preferred embodiments thereof.

### BRIEF DESCRIPTION OF THE DRAWINGS

Reference may now be had to the following detailed description taken together with the accompanying drawings in which:

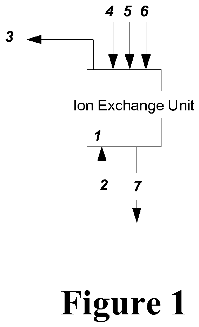

Figure 1 is a flow diagram illustrating a process for eluting antimony(V) from an aminophosphonic resin in accordance with a preferred embodiment of the present invention.

### DETAILED DESCRIPTION OF THE PREFERRED EMBODIMENTS

Reference is made to Figure 1 which shows a schematic of a process for removing antimony from an electrolyte in accordance with a preferred embodiment of the present invention, and which incorporates a step of reducing Sb(V) adsorbed on the resin to Sb(III). Specifically, Figure 1 shows an ion exchange unit 1 provided with an input end proximal to reference numbers 2, 4 to 6, and an output end proximal to reference numbers 3, 7, and has an aminophosphonic acid resin for cation exchange with antimony.

The ion exchange unit 1 is intended for operation with a copper electrorefining facility or a copper electrolyte tank house which is used to prepare purified copper from unrefined copper. Specifically, the copper electrorefining facility may include one or more electrolytic cells filled with an aqueous solution, or an electrolyte, for submerging an unrefined copper anode and a plate or reticulated cathode for plating copper thereon. When an electric current is applied to the electrolytic cells, copper dissolves into the electrolyte and plates onto the cathode to obtain a plated cathode to be sold to copper products manufacturers. With repeated use, the electrolyte becomes more concentrated with impurities normally found in unrefined copper, such as bismuth, antimony, nickel, arsenic and cobalt, and which, if left untreated, leads to copper plated cathodes of degrading purity. The electrolytic cells may be replenished with new electrolyte or contaminated electrolyte may be recycled after treatment in a purification system.

As noted above, the ion exchange unit 1 has a cation exchange resin (not shown) provided on the stationary phase (not shown) an aminophosphonic (or aminomethylphosphonic) acid functional group -NHCH₂PO₃H₂ for adsorbing antimony, including Sb(III) and Sb(V). For operation, contaminated electrolyte is communicated as an acid stream 2 from the input end of the ion exchange unit 1 through the cation exchange resin, such that Sb(III) and Sb(V) in the acid stream 2 are adsorbed, exchanged or loaded onto the stationary phase. The acid stream 2 with all or a portion of Sb(III) and Sb(V) impurities therein removed exits the ion exchange unit 1 as an effluent stream 3 to be returned and recycled to the copper electrorefining facility.

The loaded or adsorbed Sb(III) and Sb (V) are eluted from the ion exchange unit 1 with an eluting solution at a temperature between 65°C and 90°C, and which is prepared by combining streams 4 to 6 of respectively 5 to 8 N hydrochloric acid, sodium or potassium iodide and sodium sulfite. In particular, the eluting solution was prepared so as to include 30 to 125 mg/L of sodium iodide or 75 to 250 mg/L of potassium iodide, and 20 to 35 g/L of sodium sulfite with respect to a total volume of the eluting solution.

In an experimental study, it has been shown that sodium sulfite provided potassium iodide-catalyzed reduction of adsorbed Sb(V) to Sb(III) in accordance with the following chemical equation (1), and reduced Sb(III) eluted with hydrochloric acid as an effluent stream 7:

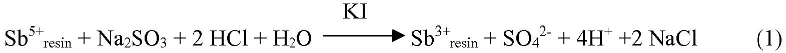

It has been appreciated that reduction of Sb(V) to Sb(III) renders thus reduced Sb(III) significantly more susceptible to desorption by the eluting solution having hydrochloric acid.

In an additional study, 0.135 mL of aminophosphonic resin was loaded into a packed resin column. A feed solution of sulfuric acid at 175 g/L, 48 g/L copper, 140 mg/L Sb(III) and 140 mg/L Sb(V) was prepared. A total of 13.5 L of the feed solution was passed through the resin column, and the product effluent was collected in a flask. Deionized water was passed through the column to displace the feed and it was collected into a separate flask and had a volume of 0.270 L. The column was next regenerated with 0.103 L of 7 N HCl with 23.2 g/L Na₂SO₃ and 133 mg/L KI and 0.572 L of deionized water. The effluents from both these steps were collected together giving a combined volume of 0.675 liters.

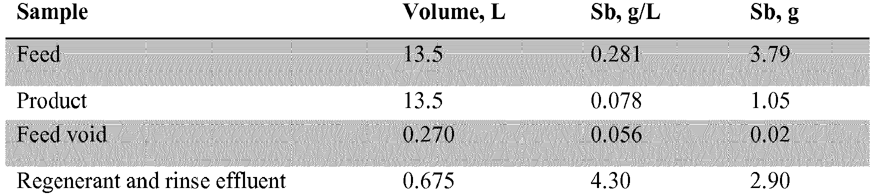

As seen in the table above, the results show a good agreement between the total amount of Sb loaded onto the resin, and the total amount of Sb leaving the system in the product and the waste streams. Therefore, all Sb loaded onto the resin was removed by the catalytic regeneration step.

It has been also appreciated that the process may conveniently be performed within a resin bed of the cation exchange resin, and significantly reduces the amount of acid required for eluting antimony, as well as associated costs and downtime. The combination of sodium sulfite with potassium iodide may allow for an increased antimony reduction rate, allowing for reduction of Sb(V) within the resin bed without significantly lowering a flow rate. The applicant has also appreciated that in contrast to other reducing agents such as thiourea, the process with the sulfite compound did not form a significant amount of solids, thereby reducing or eliminating clogging of the resin beads.

## Claims

1. A process for eluting antimony(V) adsorbed to a cation exchange resin, the process comprising contacting the resin with an iodine compound and a sulfur compound, the sulfur compound comprising one or more of sulfite, bisulfite, metabisulfite, sodium dithionite, potassium dithionite, sulfur dioxide and sodium hydroxymethanesulfinate, wherein the iodine compound and the sulfur compound are selected to effect reduction of said antimony(V) to form antimony(III).

2. The process of claim 1, further comprising contacting the resin with an acid compound selected to desorb at least said antimony(III) from the resin, the acid compound comprising one or more of hydrochloric acid, sulfuric acid, nitric acid, phosphoric acid, hydrofluoric acid, hydrobromic acid, hydroiodic acid, perchloric acid and boric acid.

3. The process of claim 2, wherein said contacting comprises contacting the resin with an eluting mixture comprising the iodine compound, the sulfur compound and the acid compound, and wherein the sulfur compound is selected to effect the reduction of said antimony(V) to form said antimony(III), and the iodine compound is selected to catalyze said reduction.

4. The process of claim 3, wherein the sulfur compound further comprises an alkali or alkali earth metal cation selected from the group consisting of barium, beryllium, calcium, lithium, magnesium, sodium and potassium, and the eluting mixture comprises the sulfur compound at a concentration between 1.0 g/L and 120 g/L, between 10 g/L and 80 g/L or between 20 g/L and 35 g/L, with respect to a total volume of the eluting mixture.

5. The process of claim 1, wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

6. The process of any one of claims 1 to 5, wherein the iodine compound comprises one or both of sodium iodide and potassium iodide.

7. The process of any one of claims 1 to 6, wherein the sulfur compound is sodium sulfite, the iodine compound is one or both of sodium iodide and potassium iodide, and optionally, the acid compound is hydrochloric acid.

8. The process of any one of claims 1 to 6, wherein the eluting mixture is an eluting solution comprising: sodium sulfite at a concentration between 10 g/L and 80 g/L or between 20 g/L and 35 g/L; sodium iodide at a concentration between 30 mg/L and 125 mg/L and/or potassium iodide at a concentration between 75 mg/L and 250 mg/L; and hydrochloric acid at a concentration between 2 N and 10 N or between 5 N and 8 N, with respect to a total volume of the eluting solution, and optionally wherein a temperature of the eluting solution is between 20°C and 95°C or between 65°C and 90°C when contacting the resin.

9. An eluting mixture for desorbing antimony(V) adsorbed to a cation exchange resin, said eluting mixture comprising an iodine compound and a sulfur compound, the sulfur compound comprising one or more of sulfite, bisulfite, metabisulfite, sodium dithionite, potassium dithionite, sulfur dioxide and sodium hydroxymethanesulfinate, wherein the iodine compound and the sulfur compound are selected to effect reduction of said antimony(V) to form antimony(III).

10. The mixture of claim 9, further comprising an acid compound selected to desorb at least said antimony(III) from the resin, the acid compound comprising one or more of hydrochloric acid, sulfuric acid, nitric acid, phosphoric acid, hydrofluoric acid, hydrobromic acid, hydroiodic acid, perchloric acid and boric acid.

11. The mixture of claim 9 or claim 10, wherein the sulfur compound further comprises an alkali or alkali earth metal cation selected from the group consisting of barium, beryllium, calcium, lithium, magnesium, sodium and potassium, and the eluting mixture comprises the sulfur compound at a concentration between 1.0 g/L and 120 g/L, between 10 g/L and 80 g/L or between 20 g/L and 35 g/L, with respect to a total volume of the eluting mixture.

12. The mixture of any one of claims 9 to 11, wherein the sulfur compound comprises one or more of ammonium sulfite, sodium sulfite, sodium bisulfite, sodium metabisulfite, sodium dithionite, potassium sulfite, potassium bisulfite, potassium metabisulfite, potassium dithionite, sulfur dioxide and sodium hydroxymethanesulfinate, one or more of sodium sulfite and sodium bisulfite, or sodium sulfite.

13. The mixture of any one of claims 9 to 12, wherein the iodine compound comprises one or both of sodium iodide and potassium iodide.

14. The mixture of any one of claims 9 to 13, wherein the sulfur compound is sodium sulfite, the iodine compound is one or both of sodium iodide and potassium iodide, and optionally, the acid compound is hydrochloric acid.

15. The eluting mixture of any one of claims 9 to 13, wherein the eluting mixture is an eluting solution comprising: sodium sulfite at a concentration between 10 g/L and 80 g/L or between 20 g/L and 35 g/L; sodium iodide at a concentration between 30 mg/L and 125 mg/L and/or potassium iodide at a concentration between 75 mg/L and 250 mg/L; and hydrochloric acid at a concentration between 2 N and 10 N or between 5 N and 8 N, with respect to a total volume of the eluting solution, and optionally wherein the eluting solution is for being at a temperature between 20°C and 95°C or between 65°C and about 90°C when contacting the resin to desorb said antimony(V).

## Patentansprüche

1. Verfahren zum Eluieren von Antimon (V), das an ein Kationenaustauscherharz adsorbiert ist, das Verfahren umfassend das Inkontaktbringen des Harzes mit einer lodverbindung und einer Schwefelverbindung, wobei die Schwefelverbindung eines oder mehrere von Sulfit, Bisulfit, Metabisulfit, Natriumdithionit, Kaliumdithionit, Schwefeldioxid und Natriumhydroxymethansulfinat umfasst, wobei die lodverbindung und die Schwefelverbindung ausgewählt sind, um eine Reduktion des Antimons (V) zu bewirken, um Antimon (III) zu bilden.

2. Verfahren nach Anspruch 1, ferner umfassend das Inkontaktbringen des Harzes mit einer Säureverbindung, die ausgewählt ist, um mindestens das Antimon (III) von dem Harz zu desorbieren, wobei die Säureverbindung eine oder mehrere von Salzsäure, Schwefelsäure, Salpetersäure, Phosphorsäure, Fluorwasserstoffsäure, Bromwasserstoffsäure, lodwasserstoffsäure, Perchlorsäure und Borsäure umfasst.

3. Verfahren nach Anspruch 2, wobei das Inkontaktbringen das Inkontaktbringen des Harzes mit einem Elutionsgemisch umfasst, das die lodverbindung, die Schwefelverbindung und die Säureverbindung umfasst, und wobei die Schwefelverbindung ausgewählt ist, um die Reduktion des Antimons (V) zu bewirken, um das Antimon (III) zu bilden, und die lodverbindung ausgewählt ist, um die Reduktion zu katalysieren.

4. Verfahren nach Anspruch 3, wobei die Schwefelverbindung ferner ein Alkali- oder Erdalkalimetallkation umfasst, ausgewählt aus der Gruppe, bestehend aus Barium, Beryllium, Calcium, Lithium, Magnesium, Natrium und Kalium, und das Elutionsgemisch die Schwefelverbindung in einer Konzentration zwischen 1,0 g/l und 120 g/l, zwischen 10 g/l und 80 g/l oder zwischen 20 g/l und 35 g/l bezogen auf ein Gesamtvolumen des Elutionsgemisches umfasst.

5. Verfahren nach Anspruch 1, wobei die Schwefelverbindung eines oder mehrere von Ammoniumsulfit, Natriumsulfit, Natriumbisulfit, Natriummetabisulfit, Natriumdithionit, Kaliumsulfit, Kaliumbisulfit, Kaliummetabisulfit, Kaliumdithionit, Schwefeldioxid und Natriumhydroxymethansulfinat, eines oder mehrere von Natriumsulfit und Natriumbisulfit oder Natriumsulfit umfasst.

6. Verfahren nach einem der Ansprüche 1 bis 5, wobei die lodverbindung eines oder beide von Natriumiodid und Kaliumiodid umfasst.

7. Verfahren nach einem der Ansprüche 1 bis 6, wobei die Schwefelverbindung Natriumsulfit ist, die lodverbindung eines oder beide von Natriumiodid und Kaliumiodid ist und die Säureverbindung wahlweise Salzsäure ist.

8. Verfahren nach einem der Ansprüche 1 bis 6, wobei das Elutionsgemisch eine Elutionslösung ist, umfassend: Natriumsulfit in einer Konzentration zwischen 10 g/l und 80 g/l oder zwischen 20 g/l und 35 g/l; Natriumiodid in einer Konzentration zwischen 30 mg/l und 125 mg/l und/oder Kaliumiodid in einer Konzentration zwischen 75 mg/l und 250 mg/l; und Salzsäure in einer Konzentration zwischen 2 N und 10 N oder zwischen 5 N und 8 N bezogen auf ein Gesamtvolumen der Elutionslösung, und wobei eine Temperatur der Elutionslösung wahlweise zwischen 20 °C und 95 °C oder zwischen 65 °C und 90 °C liegt, wenn das Harz in Kontakt gebracht wird.

9. Elutionsgemisch zum Desorbieren von Antimon (V), das an ein Kationenaustauscherharz adsorbiert ist, wobei das Elutionsgemisch eine lodverbindung und eine Schwefelverbindung umfasst, die Schwefelverbindung eines oder mehrere von Sulfit, Bisulfit, Metabisulfit, Natriumdithionit, Kaliumdithionit, Schwefeldioxid und Natriumhydroxymethansulfinat umfasst, wobei die Iodverbindung und die Schwefelverbindung ausgewählt sind, um eine Reduktion des Antimons (V) zu bewirken, um Antimon (III) zu bilden.

10. Gemisch nach Anspruch 9, ferner umfassend eine Säureverbindung, die ausgewählt ist, um mindestens das Antimon (III) von dem Harz zu desorbieren, wobei die Säureverbindung eine oder mehrere von Salzsäure, Schwefelsäure, Salpetersäure, Phosphorsäure, Fluorwasserstoffsäure, Bromwasserstoffsäure, Iodwasserstoffsäure, Perchlorsäure und Borsäure umfasst.

11. Gemisch nach Anspruch 9 oder 10, wobei die Schwefelverbindung ferner ein Alkali- oder Erdalkalimetallkation umfasst, ausgewählt aus der Gruppe, bestehend aus Barium, Beryllium, Calcium, Lithium, Magnesium, Natrium und Kalium, und das Elutionsgemisch die Schwefelverbindung in einer Konzentration zwischen 1,0 g/l und 120 g/l, zwischen 10 g/l und 80 g/l oder zwischen 20 g/l und 35 g/l bezogen auf ein Gesamtvolumen des Elutionsgemisches umfasst.

12. Gemisch nach einem der Ansprüche 9 bis 11, wobei die Schwefelverbindung eines oder mehrere von Ammoniumsulfit, Natriumsulfit, Natriumbisulfit, Natriummetabisulfit, Natriumdithionit, Kaliumsulfit, Kaliumbisulfit, Kaliummetabisulfit, Kaliumdithionit, Schwefeldioxid und Natriumhydroxymethansulfinat, eines oder mehrere von Natriumsulfit und Natriumbisulfit oder Natriumsulfit umfasst.

13. Gemisch nach einem der Ansprüche 9 bis 12, wobei die lodverbindung eines oder beide von Natriumiodid und Kaliumiodid umfasst.

14. Gemisch nach einem der Ansprüche 9 bis 13, wobei die Schwefelverbindung Natriumsulfit ist, die lodverbindung eines oder beide von Natriumiodid und Kaliumiodid ist und die Säureverbindung wahlweise Salzsäure ist.

15. Elutionsgemisch nach einem der Ansprüche 9 bis 13, wobei das Elutionsgemisch eine Elutionslösung ist, umfassend: Natriumsulfit in einer Konzentration zwischen 10 g/l und 80 g/l oder zwischen 20 g/l und 35 g/l; Natriumiodid in einer Konzentration zwischen 30 mg/l und 125 mg/l und/oder Kaliumiodid in einer Konzentration zwischen 75 mg/l und 250 mg/l; und Salzsäure in einer Konzentration zwischen 2 N und 10 N oder zwischen 5 N und 8 N bezogen auf ein Gesamtvolumen der Elutionslösung, und wobei die Elutionslösung wahlweise bei einer Temperatur zwischen 20 °C und 95 °C oder zwischen 65 °C und etwa 90 °C vorliegt, wenn das Harz in Kontakt gebracht wird, um das Antimon (V) zu desorbieren.

## Revendications

1. Procédé d'élution d'antimoine(V) adsorbé sur une résine échangeuse de cations, le procédé comprenant la mise en contact de la résine avec un composé iodé et un composé soufré, le composé soufré comprenant un ou plusieurs parmi sulfite, bisulfite, métabisulfite, dithionite de sodium, dithionite de potassium, dioxyde de soufre et hydroxyméthanesulfinate de sodium, dans lequel le composé iodé et le composé soufré sont choisis pour réaliser une réduction dudit antimoine(V) pour former de l'antimoine(III).

2. Procédé selon la revendication 1, comprenant en outre la mise en contact de la résine avec un composé acide choisi pour désorber au moins ledit antimoine(III) de la résine, le composé acide comprenant un ou plusieurs parmi acide chlorhydrique, acide sulfurique, acide nitrique, acide phosphorique, acide fluorhydrique, acide bromhydrique, acide iodhydrique, acide perchlorique et acide borique.

3. Procédé selon la revendication 2, dans lequel ladite mise en contact comprend la mise en contact de la résine avec un mélange d'élution comprenant le composé iodé, le composé soufré et le composé acide, et dans lequel le composé soufré est choisi pour réaliser la réduction dudit antimoine(V) pour former ledit antimoine(III), et le composé iodé est choisi pour catalyser ladite réduction.

4. Procédé selon la revendication 3, dans lequel le composé soufré comprend en outre un cation de métal alcalin ou alcalino-terreux choisi dans le groupe constitué de baryum, béryllium, calcium, lithium, magnésium, sodium et potassium, et le mélange d'élution comprend le composé soufré à une concentration entre 1,0 g/L et 120 g/L, entre 10 g/L et 80 g/L ou entre 20 g/L et 35 g/L, par rapport à un volume total du mélange d'élution.

5. Procédé selon la revendication 1, dans lequel le composé soufré comprend un ou plusieurs parmi sulfite d'ammonium, sulfite de sodium, bisulfite de sodium, métabisulfite de sodium, dithionite de sodium, sulfite de potassium, bisulfite de potassium, métabisulfite de potassium, dithionite de potassium, dioxyde de soufre et hydroxyméthanesulfinate de sodium, un ou plusieurs parmi sulfite de sodium et bisulfite de sodium, ou du sulfite de sodium.

6. Procédé selon l'une quelconque des revendications 1 à 5, dans lequel le composé iodé comprend l'un et/ou l'autre parmi iodure de sodium et iodure de potassium.

7. Procédé selon l'une quelconque des revendications 1 à 6, dans lequel le composé soufré est du sulfite de sodium, le composé iodé est l'un et/ou l'autre parmi iodure de sodium et iodure de potassium, et éventuellement, le composé acide est de l'acide chlorhydrique.

8. Procédé selon l'une quelconque des revendications 1 à 6, dans lequel le mélange d'élution est une solution d'élution comprenant : du sulfite de sodium à une concentration entre 10 g/L et 80 g/L ou entre 20 g/L et 35 g/L ; de l'iodure de sodium à une concentration entre 30 mg/L et 125 mg/L et/ou de l'iodure de potassium à une concentration entre 75 mg/L et 250 mg/L ; et de l'acide chlorhydrique à une concentration entre 2 N et 10 N ou entre 5 N et 8 N, par rapport à un volume total de la solution d'élution, et éventuellement dans lequel une température de la solution d'élution est entre 20 °C et 95 °C ou entre 65 °C et 90 °C lors de la mise en contact avec la résine.

9. Mélange d'élution pour désorber de l'antimoine(V) adsorbé sur une résine échangeuse de cations, ledit mélange d'élution comprenant un composé iodé et un composé soufré, le composé soufré comprenant un ou plusieurs parmi sulfite, bisulfite, métabisulfite, dithionite de sodium, dithionite de potassium, dioxyde de soufre et hydroxyméthanesulfinate de sodium, dans lequel le composé iodé et le composé soufré sont choisis pour réaliser une réduction dudit antimoine(V) pour former de l'antimoine(III).

10. Mélange selon la revendication 9, comprenant en outre un composé acide choisi pour désorber au moins ledit antimoine(III) de la résine, le composé acide comprenant un ou plusieurs parmi acide chlorhydrique, acide sulfurique, acide nitrique, acide phosphorique, acide fluorhydrique, acide bromhydrique, acide iodhydrique, acide perchlorique et acide borique.

11. Mélange selon la revendication 9 ou la revendication 10, dans lequel le composé soufré comprend en outre un cation de métal alcalin ou alcalino-terreux choisi dans le groupe constitué de baryum, béryllium, calcium, lithium, magnésium, sodium et potassium, et le mélange d'élution comprend le composé soufré à une concentration entre 1,0 g/L et 120 g/L, entre 10 g/L et 80 g/L ou entre 20 g/L et 35 g/L, par rapport à un volume total du mélange d'élution.

12. Mélange selon l'une quelconque des revendications 9 à 11, dans lequel le composé soufré comprend un ou plusieurs parmi sulfite d'ammonium, sulfite de sodium, bisulfite de sodium, métabisulfite de sodium, dithionite de sodium, sulfite de potassium, bisulfite de potassium, métabisulfite de potassium, dithionite de potassium, dioxyde de soufre et hydroxyméthanesulfinate de sodium, un ou plusieurs parmi sulfite de sodium et bisulfite de sodium, ou du sulfite de sodium.

13. Mélange selon l'une quelconque des revendications 9 à 12, dans lequel le composé iodé comprend l'un et/ou l'autre parmi iodure de sodium et iodure de potassium.

14. Mélange selon l'une quelconque des revendications 9 à 13, dans lequel le composé soufré est du sulfite de sodium, le composé iodé est l'un et/ou l'autre parmi iodure de sodium et iodure de potassium, et éventuellement, le composé acide est de l'acide chlorhydrique.

15. Mélange d'élution selon l'une quelconque des revendications 9 à 13, dans lequel le mélange d'élution est une solution d'élution comprenant : du sulfite de sodium à une concentration entre 10 g/L et 80 g/L ou entre 20 g/L et 35 g/L ; de l'iodure de sodium à une concentration entre 30 mg/L et 125 mg/L et/ou de l'iodure de potassium à une concentration entre 75 mg/L et 250 mg/L ; et de l'acide chlorhydrique à une concentration entre 2 N et 10 N ou entre 5 N et 8 N, par rapport à un volume total de la solution d'élution, et éventuellement dans lequel la solution d'élution devrait être à une température entre 20 °C et 95 °C ou entre 65 °C et environ 90 °C lors de la mise en contact avec la résine pour désorber ledit antimoine(V).
